# EUROPÄISCHE PATENTSCHRIFT

(11) **EP 0 788 779 B1**
(45) Veröffentlichungstag und Bekanntmachung des Hinweises auf die Patenterteilung: **22.05.2002**
(21) Anmeldenummer: 97100622.6
(22) Anmeldetag: 16.01.1997
(51) Int. Cl.: A61C 1/06, A61C 1/05

(54) **Gleichstrommotor zum Antrieb eines dentalen Instrumentes**
D.C. Motor for driving a dental instrument
Moteur à courant continu pour l'entraînement d'un instrument dentaire

(30) Priorität: 08.02.1996 DE 19604628
(43) Veröffentlichungstag der Anmeldung: 13.08.1997
(73) Patentinhaber: KALTENBACH & VOIGT GMBH & CO., 88400 Biberach (DE)
(72) Erfinder: Thaler, Wolfgang, 88299 Leutkirch (DE); Gruber, Helmut, 87740 Buxheim (DE); Düsing, Josef, 88299 Leutkirch (DE)
(74) Vertreter: Schmidt-Evers, Jürgen, Dipl.-Ing.

(56) Entgegenhaltungen:
- DE-A- 3 237 650
- DE-A- 3 446 633
- FR-A- 2 345 135
- FR-A- 2 374 887
- GB-A- 1 115 280

## Beschreibung

Die vorliegende Erfindung betrifft einen Gleichstrommotor zum Antrieb eines dentalen Instrumentes. Insbesondere betrifft die Erfindung einen kollektorlosen Gleichstrommotor, an dem über eine genormte Kupplung ein zahnärztliches Instrument aufgesteckt werden kann.

Rotierende dentale Instrumente, z.B. Turbineninstrumente, werden in der Regel von einem kollektorlosen Gleichstrommotor angetrieben. Zu diesem Zweck werden die rotierenden dentalen Instrumente über eine genormte Kupplung auf den Gleichstrommotor aufgesteckt. Da jedoch das dentale Instrument, abhängig von dessen Typ, mit verschiedenen Versorgungsmedien, z.B. Sprayluft, Spraywasser, Kühlluft oder Strom für den Antrieb des Instruments oder für dessen Lichtversorgung, versorgt werden muß, müssen für diese Versorgungsmedien Medienleitungen vorhanden sein, die über den Gleichstrommotor dem anzutreibenden dentalen Instrument zugeführt werden. Da diese Medienleitungen in den Motorbereich zu integrieren sind, führt dies zu einer verminderten Leistungsfähigkeit des Gleichstrommotors. Aufgrund der auftretenden Platzprobleme muß beispielsweise der Gleichstrommotor selbst verkleinert werden, wodurch sich jedoch die Leistungsfähigkeit des Gleichstrommotors verringert. Ebenso können aufgrund der in den Motorbereich integrierten Medienleitungen verstärkte Rastmomente des Rotors des Gleichstrommotors auftreten, wodurch sich das Laufverhalten des Gleichstrommotors verschlechtert. Schließlich ist auch die Führung der Medienleitungen in dem Motorbereich problematisch, da in der Regel mehrere Biegungen dieser Medienleitungen erforderlich sind.

Aus der DE-PS-2301564 ist ein Gleichstrommotor zum Antrieb eines ankuppelbaren dentales Instrumentes bekannt, wobei die Motorwelle als Hohlraum ausgebildet ist. Der Hohlraum steht mit einer Druckluftversorgungseinrichtung in Verbindung und dient somit als Medienleitung für die Druckluft. In der DE-PS-2301564 wird jedoch nicht vorgeschlagen, den Hohlraum als Medienleitung für eine Zuführung von Druckluft zu einem dentalen Instrument zu verwenden, sondern die in dem Hohlraum geführte Druckluft dient ausschließlich zur Kühlung des Motors.

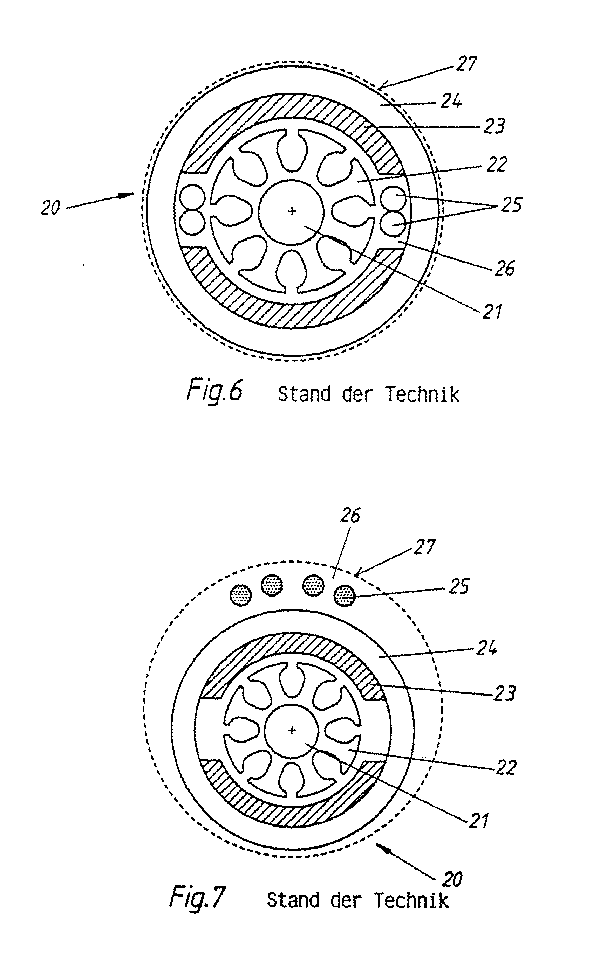

Des weiteren sind beispielsweise die in den Figuren 5-7 gezeigten Gleichstrommotor-Systeme mit integrierten Medienleitungen bekannt.

Figur 5 zeigt einen kollektorlosen Gleichstrommotor 20, mit einem als zweipolig diametral magnetisierten Permanentmagnet ausgebildeten Rotormagnet 22, der von einem Stator 23 umgeben ist. An den Stator 23 anschließend ist ein - in der Regel weichmagnetischer - Rückschlußring 24 ausgebildet. Dieser Rückschlußring 24 ist an zwei gegenüberliegenden Seiten abgeflacht, so daß zwischen dem Rückschlußring 24 und dem Gehäuse 27 des Gleichstrommotors 20 ein Freiraum 26 für die Integration von Medienleitungen 25 gebildet ist. Diese Ausführungsform hat den Vorteil, daß die Funktionsbereiche des Motors 20 nahezu den gesamten Innenraum des Gehäuses 27 ausfüllen können und zudem eine einfache Montage der Medienleitungen 25 möglich ist. Durch die einfache Zugänglichkeit der Medienleitungen 25 können diese auch unter Umständen vereinfacht gereinigt werden, was insbesondere vorteilhaft bezüglich der Hygiene der Sprayleitungen ist. Problematisch bei dem in Figur 5 gezeigten Ausführungsbeispiel ist jedoch, daß aufgrund des abgeflachten magnetischen Rückschlußrings 24 Unsymmetrien in der Magnetfeldführung auftreten, die zu Raststellungen des Rotors 22, insbesondere bei kollektorlosen Gleichstrommotoren, führen können. Aufgrund derartiger Raststellungen des Rotors 22 kommt es insbesondere bei niedrigen Rotordrehzahlen zu einem unrunden und ungleichmäßgen Lauf des Gleichstrommotors 20.

Figur 6 zeigt ein weiteres Ausführungsbeispiel eines bekannten Gleichstrommotors mit integrierten Medienleitungen. Figur 6 zeigt einen Kohle/Kollektor-Gleichstrommotor 20 mit einem auf einer Rotorwelle 21 befestigten Rotoranker 22 sowie einem Stator 23 und einem Rückschlußring 24. Zwischen dem Anker 22 und dem Rückschlußring 24 sind Freiräume 26 für die Integration von Medienleitungen 25 ausgebildet. Die Medienleitungen 25 werden somit innerhalb des Gleichstrommotors 20 geführt. Diese Ausführungsform hat den Vorteil, daß der ansonsten nicht genutzte Freiraum zwischen den Segmenten des Statormagnets 23 für die Integration der Medienleitungen 25 ausgenützt wird. Bei diesem Ausführungsbeispiel ist jedoch problematisch, daß die Medienleitungen 25 in der Regel mehrfach gebogen werden müssen. Des weiteren ist die Montage der Medienleitungen 25 sowie des Rotors 22 des Gleichstrommotors 20 sehr aufwendig. Schließlich kann diese innere Führung der Medienleitungen 25 zwischen den Segmenten des Statormagnets 23 nur für den speziellen in Figur 6 dargestellten Motortyp angewendet werden.

Figur 7 zeigt ein drittes bekanntes Ausführungsbeispiel eines Gleichstrommotors mit integrierten Medienleitungen. Bei dem in Figur 7 dargestellten Ausführungsbeispiel sind die Medienleitungen 25 in einem Freiraum 26 außerhalb des eigentlichen Gleichstrommotors 20 geführt. Die Medienleitungen befinden sich somit in dem Freiraum 26 zwischen dem Rückschlußring 24 und dem Gehäuse 27 des Gleichstrommotors. Vorteilhaft bei diesem Ausführungsbeispiel ist, daß die Führung der Medienleitungen außerhalb des eigentlichen Motors 20 für jeden Motortyp anwendbar ist und die Medienleitungen 25 einfach montierbar sind. Wie bei dem in Figur 5 gezeigten Ausführungsbeispiel können die Medienleitungen 25 aufgrund ihrer einfachen Zugänglichkeit besser gereinigt werden, was insbesondere zu einer besseren Hygiene der Sprayleitungen führen kann. Bei dem in Figur 7 gezeigten Ausführungsbeispiel ist dagegen problematisch, daß bei einem vorgegebenen maximalen Durchmesser des Gehäuses 27 aufgrund der Platzprobleme der eigentliche Gleichstrommotor 20 verkleinert werden muß, was jedoch die Leistung des Gleichstrommotors verringert und zudem eine verschlechterte Robustheit des Gleichstrommotos 20 zur Folge hat. Der Gleichstrommotor ist daher verschleißanfälliger und durch die verkleinerten Bauteile des Gleichstrommotors ist die Montage schwieriger. Insbesondere ist ein aufwendigeres Motorkühlsystem erforderlich.

Aus der Druckschrift DE-C2-2659060 ist eine Mischform der in Figur 5 und 7 dargestellten Ausführungsbeispiele bekannt, wobei eine Kühlmittelleitung in einen Freiraum zwischen der Motorgehäusewand und dem Stator des Gleichstrommotors geführt wird.

Der Erfindung liegt die Aufgabe zugrunde, einen kollektorlosen Gleichstrommotor nach dem Oberbegriff des Patentanspruchs 1 zum Antrieb eines ankuppelbaren dentales Instrumentes zu schaffen, mit dem trotz der Integration von Medienleitungen für die Versorgung des dentalen Instrumentes der gesamte Durchmesser des Motorgehäuses für die eigentlichen Antriebsteile des Gleichstrommotors ausgenützt werden kann.

Insbesondere soll der somit geschaffene Gleichstrommotor ein ruhiges und gleichmäßiges Laufverhalten ohne Rastmomente des Rotors aufweisen. Die Medienleitungen sollen dem bereits fertig montierten Gleichstrommotor auf einfache Weise hinzugefügt werden können und keine Biegungen aufweisen.

Die oben genannte Aufgabe wird durch die kennzeichnenden Merkmale des Patentanspruches 1 gelöst.

Erfindungsgemäß weist die freitragende Stator-Luftspaltwicklung sich in Längsrichtung des Gleichstrommotors erstreckende Freiräume für die Medienleitungen zur Versorgung des ankuppelbaren dentalen Instrumentes auf. Die Medienleitungen sind somit erfindungsgemäß in die Stator-Luftspaltwicklung integriert.

Vorteilhafterweise besteht die Stator-Luftspaltwicklung aus einer Mehrzahl von Einzelspulen, die gleichmäßig angeordnet sind und einen geschlossenen Spulenring bilden. Diese Einzelspulen sind in Umfangsrichtung der Stator-Luftspaltwicklung teilweise überlappend angeordnet, so daß die Freiräume für die Medienleitungen durch diejenigen Bereiche der Stator-Luftspaltwicklung gebildet sind, an denen sich die Einzelspulen nicht überlappen. Die Freiräume für die Medienleitungen zur Versorgung eines ankuppelbaren dentalen Instrumentes werden somit einerseits durch die zuvor genannten Bereiche der Stator-Luftspaltwicklung und andererseits durch einen die Stator-Luftspaltwicklung umgebenden Rückschlußring begrenzt.

Gemäß einer besonderen Ausführungsform der Erfindung sind die Einzelspulen dreieckförmig, insbesondere gleichschenkelig dreieckförmig. Die Einzelspulen sind gemäß dieser Ausführungsform derart überlappend angeordnet, daß die Grundseite jeder Einzelspule parallel zur Längsachse des Gleichstrommotors ausgerichtet ist. Die Spitzen der Dreiecke verlaufen somit in Umfangsrichtung der Stator-Luftspaltwicklung.

Vorzugsweise umfaßt die Stator-Luftspaltwicklung sechs Einzelspulen, wobei jeweils zwei gegenüberliegende Einzelspulen miteinander zu einem Spulenpaar verbunden sind und eine Phase des Gleichstrommotors bilden. Der somit geschaffene Gleichstrommotor weist insgesamt drei Phasen und drei Anschlußleitungen auf, während die zuvor beschriebenen bekannten Gleichstrommotoren lediglich zwei elektrische Anschlüsse besitzen.

Aufgrund der erfindungsgemäßen Ausgestaltung des kollektorlosen Gleichstrommotors können die eigentlichen Antriebsteile des Gleichstrommotors den gesamten Innenraum des Motorgehäuses ausnützen, so daß bei bestimmten Leistungsanforderungen die Abmessungen des Motors geringgehalten werden können und somit die Kopflastigkeit des normalerweise in einem Handstück für den behandelnden Zahnarzt integrierten Gleichstrommotors minimiert wird. Der maximale Durchmesser des Motorgehäuses beträgt üblicherweise ca. 22-23 mm.

Zudem können aufgrund des symmetrisch ausgebildeten Rotors, Stators und Rückschlußrings keine Unsymmetrien in der Magnetfeldführung auftreten, so daß Rastmomente des Rotors vermieden werden. Die Medienleitungen können auf einfache Weise dem bereits fertig montierten Gleichstrommotor hinzugefügt werden, indem sie in die Freiräume der Stator-Luftspaltwicklung eingeführt werden. Des weiteren wird ein Biegen der Medienleitungen in dem Gleichstommotor vermieden.

In den Unteransprüchen sind weitere vorteilhafte Ausgestaltungen der Erfindung beschrieben.

Die Erfindung wird nachfolgend anhand eines bevorzugten Ausführungsbeispieles unter Bezugnahme auf die beigefügte Zeichnung näher beschrieben. Es zeigen:
Fig. 1 ein Ausführungsbeispiel des erfindungsgemäßen kollektorlosen Gleichstrommotors in Längsschnittansicht,
Fig. 2 den in Figur 1 gezeigten erfindungsgemäßen kollektorlosen Gleichstrommotor in Querschnittsansicht,
Fig. 3 eine Einzelspule der Stator-Luftspaltwicklung des in Figur 1 und 2 dargestellten erfindungsgemäßen Gleichstrommotors,
Fig. 4 die Anordnung der Einzelspulen der Stator-Luftspaltwicklung bei dem erfindungsgemäßen Gleichstrommotor,
Fig. 5 ein Ausführungsbeispiel eines bekannten kollektorlosen Gleichstrommotors mit integrierten Medienleitungen,
Fig. 6 ein weiteres Ausführungsbeispiel eines bekannten Gleichstrommotors mit integrierten Medienleitungen, und
Fig. 7 ein drittes Ausführungsbeispiel eines bekannten Gleichstrommotos mit integrierten Medienleitungen.

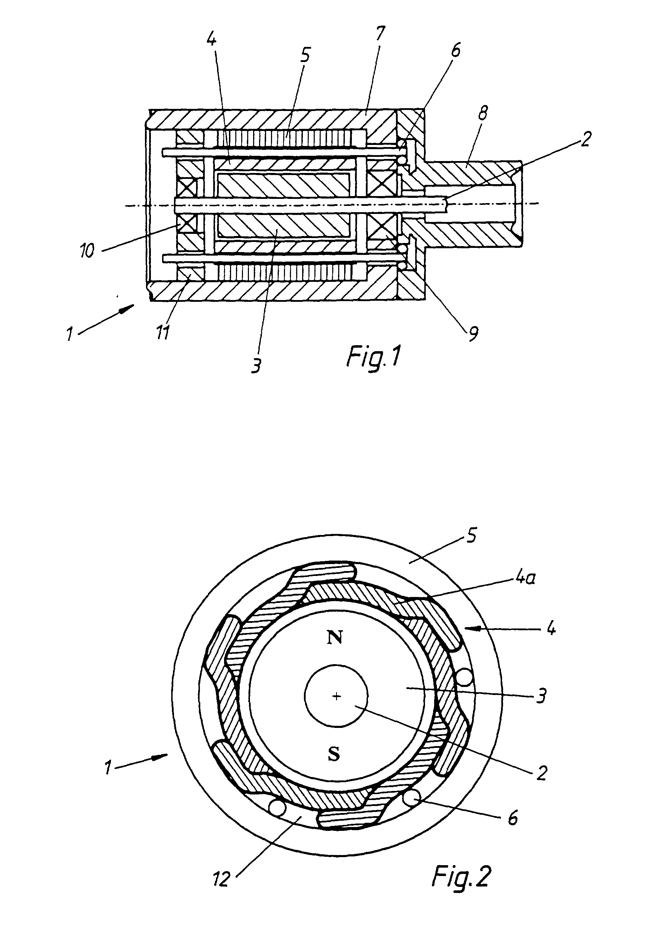

Figur 1 zeigt ein Ausführungsbeispiel des erfindungsgemäßen kollektorlosen Gleichstrommotors zum Antrieb eines ankuppelbaren dentalen Instrumentes (z.B. zahnärzlichen Instrumentes) in einer Schnittansicht entlang der Motorsymmetrieachse.

Die Antriebsteile des Gleichstrommotors 1 sind in einem Motorgehäuse 7 angeordnet, wobei mit dem Gehäuse 7 ein Kupplungsstück 8 verbunden ist, auf welches ein durch den Gleichstrommotor 1 anzutreibendes dentales Instrument gesteckt werden kann. Bei diesem Kupplungsstück 8 handelt es sich in der Regel um eine genormte Kupplung. Nach Demontage des Kupplungsstücks 8 kann der auf der Welle 2 befestigte Rotor 3 seitlich aus dem Motorgehäuse 7 herausgezogen werden. Die Motorwelle 2 ist durch ein vorderes Motorlager 9 und ein hinteres Motorlager 10 in einer hinteren Lagerhülse 11 gelagert. Der Rotor 3 ist von dem Stator umgeben, der aus einem weichmagnetischen Rückschlußring 7 und einer darin befindlichen freitragenden Stator-Luftspaltwicklung 4 besteht. Insbesondere ist der Rückschlußring 5 als geblechter Eisen-Rückschlußring hergestellt. Die freitragende Luftspaltwicklung 4 ist mit Kunststoff ausgegossen oder ausgespritzt und weist Freiräume für die Führung von Medienleitungen 6 zur Versorgung eines ankuppelbaren dentalen Instrumentes auf.

Figur 2 zeigt den in Figur 1 dargestellten erfindungsgemäßen Gleichstrommotor in Querschnittsansicht. Die freitragende Stator-Lustspaltwicklung 4 besteht aus mehreren, insbesondere sechs, Einzelspulen 4a, die gleichmäßig in Umfangsrichtung des Gleichstrommotors, d.h. in Umfangsrichtung der Stator-Luftspaltwicklung 4, angeordnet sind und einen geschlossenen Spulenring bilden. Die wesentlichen Bestandteile des Gleichstrommotors 1, d.h. der Rotor 3, die Statorwicklung 4 sowie der Rückschlußring 5, sind allesamt im wesentlichen symmetrisch und ringförmig ausgebildet. Somit werden Unsymmetrien in der Magnetfeldführung und dadurch Raststellungen des Rotors 3 vermieden. Jeweils zwei gegenüberliegende Einzelspulen 4a sind miteinander verbunden und zu einer Phase des Gleichstrommotors verschaltet. Das in Figur 2 dargestellte Ausführungsbeispiel des erfindungsgemäßen Gleichstrommotors 1 weist somit insgesamt drei Phasen bzw. drei elektrische Anschlußleitungen auf.

Aus Figur 2 ist ersichtlich, daß sich die Einzelspulen 4a der Stator-Luftspaltwicklung 4 teilweise in Umfangsrichtung der Stator-Luftspaltwicklung 4 überlappen. Somit ist die Stator-Luftspaltwicklung 4 teilweise ein- und teilweise zweischichtig ausgebildet, wobei durch die Bereiche, an denen sich die einzelnen Spulen 4a nicht überlappen, Freiräume 12 für die Integration von Medienleitungen 6 gebildet werden, die radial nach außen durch den Rückschlußring 5 begrenzt werden. Vorteilhafterweise sind die Einzelspulen 4a mehrschichtig gewickelt.

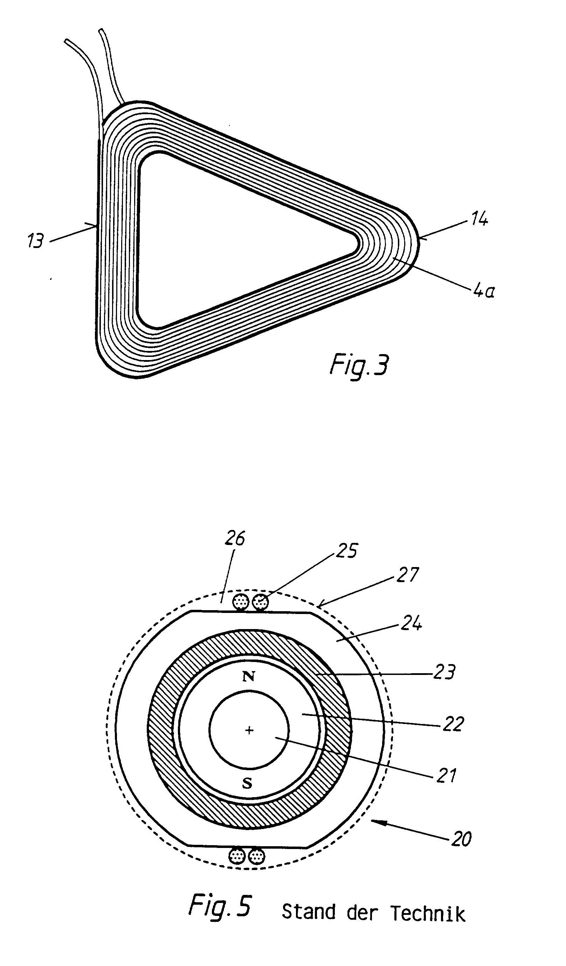

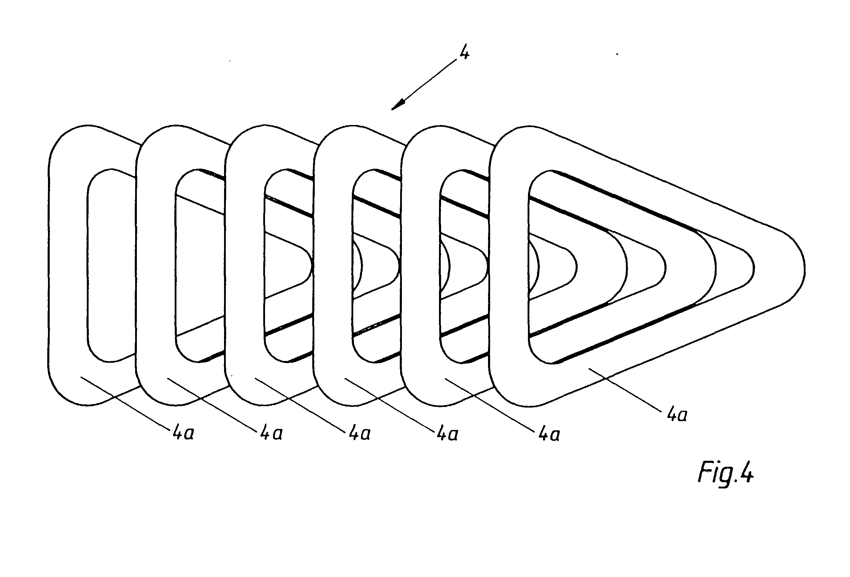

Erfindungsgemäß sind die Einzelspulen 4a, wie in Figur 3 gezeigt, dreieckförmig und insbesondere gleichschenkelig ausgebildet. Die dreieckförmigen Einzelspulen 4a sind in Umfangsrichtung der Stator-Luftspaltwicklung 4 teilweise überlappend derart angeordnet, daß die Grundseite 13 der dreieckförmigen Einzelspulen 4a jeweils parallel zur Längsachse des Gleichstrommotos verläuft. Die Spitze 14 der dreieckförmigen Einzelspulen 4a zeigt somit in Umfangsrichtung der Stator-Luftspaltwicklung. Figur 4 zeigt die Anordnung der sechs Einzelspulen 4a, die sich teilweise überlappen und somit die Stator-Luftspaltwicklung 4 bilden. Durch die erfindungsgemäße Spulenanordnung weist die Stator-Luftspaltwicklung 4 im Prinzip keine Wickelköpfe auf, so daß sich die gesamte Stator-Luftspaltwicklung 4 mit den Kupfer-Einzelspulen 4a aktiv im Magnetfeld des Rotormagnets 3 befindet. Der Rotor 3 ist insbesondere als zweipolig diametral magnetisierter Permanentmagnet ausgebildet.

Aus Figur 2 ist ersichtlich, daß durch das Zusammensetzen der Einzelspulen 4a in der Außenschicht der Stator-Luftspaltwicklung 4 insgesamt sechs Freiräume 12 gebildet werden, die insbesondere parallel zur Längsachse des Motors 1 verlaufen und ein Integrieren von Medienleitungen 6, beispielsweise zur Sprayluft-, Spraywasser-, Kühlluft- oder Stromversorgung (z.B. für die Lichtversorgung) eines dentalen Instrumentes ermöglichen. Die Medienleitungen 6, insbesondere die Spray-Medienleitungen, sind vorzugsweise aus einem nicht-magnetischen Material gefertigt, so daß Rastmomente des Rotors 3 vermieden werden und ein deutlich verbessertes Laufverhalten des Gleichstrommotors 1 erhalten werden kann.

Vorzugsweise sind die Abmessungen des erfindungsgemäßen Gleichstrommotors 1 derart gewählt, daß bei einem Außendurchmesser des Motors 1 von ca. 22 mm die Medienleitungen 6 gerade noch durch Freiräume 12 des Gleichstrommotors 1 geführt werden können. Dadurch erhöht sich die Service- und Montagefreundlichkeit bei gleichzeitig ausreichend hoher Leistungsfähigkeit des Gleichstrommotors. Des weiteren ist der Gleichstrommotor 1 derart ausgestaltet, daß nach Demontage der Instrumentenkupplung 8 der Rotor 3 ohne weitere Demontagemaßnahmen aus dem Motorgehäuse 7 gezogen werden kann, so daß im Falle einer Reparatur die in Figur 1 gezeigten Kugellager 9 und 10 wesentlich einfacher zugänglich sind. Durch die Geometrie der Freiräume 12 des Gleichstrommotors 1 ist ein im wesentlichen gerades und zu der Längsachse des Gleichstrommotors 1 paralleles Einführen der Medienleitungen 6 möglich.

## Patentansprüche

1. Kollektorloser Gleichstrommotor (1) zum Antrieb eines ankuppelbaren dentalen Instrumentes,
mit einem über eine Welle (2) drehbar gelagerten Rotormagnet (3),
mit einem Stator (4, 5) mit einer freitragenden Stator-Luftspaltwicklung (4),
mit Medienleitungen (6), die dem ankuppelbaren dentalen Instrument bestimmte Versorgungsmedien zuführen, und
mit einem Motorgehäuse (7),
**dadurch gekennzeichnet,**
**daß** die Stator-Luftspaltwicklung (4) Freiräume (12) für die Medienleitungen (6) aufweist.

2. Gleichstrommotor nach Anspruch 1,
**dadurch gekennzeichnet,**
**daß** die Stator-Luftspaltwicklung (4) aus einer Mehrzahl von Einzelspulen (4a) besteht, die gleichmäßig in Umfangsrichtung der Stator-Luftspaltwicklung (4) angeordnet sind und einen geschlossenen Spulenring bilden.

3. Gleichstrommotor nach Anspruch 2,
**dadurch gekennzeichnet,**
**daß** die Einzelspulen (4a) mehrschichtig gewickelt sind.

4. Gleichstrommotor nach Anspruch 2 oder 3,
**dadurch gekennzeichnet,**
**daß** die Einzelspulen (4a) in Umfangsrichtung der Stator-Luftspaltwicklung (4) teilweise überlappend angeordnet sind.

5. Gleichstrommotor nach Anspruch 4,
**dadurch gekennzeichnet,**
**daß** die Freiräume (12) für die Medienleitungen (6) durch diejenigen Bereiche der Stator-Luftspaltwicklung (4) gebildet sind, an denen sich die Einzelspulen (4a) nicht überlappen.

6. Gleichstrommotoren nach einem der vorhergehenden Ansprüche,
**dadurch gekennzeichnet,**
**daß** der Stator (4, 5) einen Rückschlußring (5) umfaßt, in dem die freitragende Stator-Luftspaltwicklung (4) angeordnet ist, so daß die Freiräume (12) für die Medienleitungen (6) in radialer Richtung nach außen durch den Rückschlußring (5) begrenzt werden.

7. Gleichstrommotor nach Anspruch 6,
**dadurch gekennzeichnet,**
**daß** der Rückschlußring (5) ein geblechter Eisen-Rückschlußring ist.

8. Gleichstrommotor nach einem der Ansprüche 2 bis 7,
**dadurch gekennzeichnet,**
**daß** die Einzelspulen (4a) dreieckförmig, insbesondere gleichschenkelig dreieckförmig, ausgebildet sind.

9. Gleichstrommotor nach Anspruch 8,
**dadurch gekennzeichnet,**
**daß** die dreieckförmigen Einzelspulen (4a) mit ihrer Grundseite (13) parallel zu der Längsachse des Gleichstrommotos (1) angeordnet sind.

10. Gleichstrommotor nach einem der Ansprüche 2 bis 9,
**dadurch gekennzeichnet,**
**daß** die Stator-Luftspaltwicklung (4) aus sechs Einzelspulen (4a) besteht, wobei die jeweils gegenüberliegenden Einzelspulen (4a) miteinander zu einem Spulenpaar verbunden und zu einer Phase verschaltet sind.

11. Gleichstrommotor nach einem der vorhergehenden Ansprüche,
**dadurch gekennzeichnet,**
**daß** die Stator-Luftspaltwicklung (4) mit Kunststoff ausgegossen oder ausgespritzt ist.

12. Gleichstrommotor nach einem der vorhergehenden Ansprüche,
**dadurch gekennzeichnet,**
**daß** der Rotormagnet (3) ein zweipolig diametral magnetisierter Permanentmagnet ist.

13. Gleichstrommotor nach einem der vorhergehenden Ansprüche,
**dadurch gekennzeichnet,**
**daß** die Medienleitungen (6) aus nicht-magnetischem Material gefertigt sind.

14. Gleichstrommotor nach einem der vorhergehenden Ansprüche,
**dadurch gekennzeichnet,**
**daß** die Abmessungen des Gleichstrommotors (1) derart gewählt sind, daß bei einem Außendurchmesser von 22 mm des Gleichstrommotors (1) die Freiräume (12) gerade groß genug für ein Durchführen der Medienleitungen (6) durch den Gleichstrommotor (1) sind.

15. Gleichstrommotor nach einem der vorhergehenden Ansprüche,
**dadurch gekennzeichnet,**
**daß** der Gleichstrommotor (1) eine Kupplung (8) aufweist, auf die ein durch den Gleichstrommotor (1) anzutreibendes dentales Instrument steckbar ist.

16. Gleichstrommotor nach einem der vorhergehenden Ansprüche,
**dadurch gekennzeichnet,**
**daß** der Rotormagnet (3) und der Stator mit der Stator-Luftspaltwicklung (4) und dem Rückschlußring (5) ringförmig ausgebildet und zueinander konzentrisch angeordnet sind.

17. Gleichstrommotor nach einem der vorhergehenden Ansprüche,
**dadurch gekennzeichnet,**
**daß** die Freiräume (12) in Längsrichtung des Gleichstrommotors (1) und im wesentlichen parallel zu der Längsachse des Gleichstrommotors verlaufen.

18. Gleichstrommotor nach Anspruch 15,
**dadurch gekennzeichnet,**
**daß** der Rotormagnet (3) nach Abnahme der Kupplung (8) von dem Motorgehäuse (7) seitlich aus dem Motorgehäuse (7) herausziehbar ist.

## Claims

1. Collectorless D.C. motor (1) for driving a dental instrument which can be coupled thereon,
having a rotor magnet (3) rotatably mounted via a shaft (2),
having a stator (4, 5) having a coreless stator air-gap winding (4),
having media lines (6), which supply certain supply media to the dental instrument which can be coupled thereto, and
having a motor housing (7),
**characterised in that**,
the stator air-gap winding (4) has free spaces (12) for the media lines (6).

2. D.C. motor according to claim 1,
**characterised in that**,
the stator air-gap winding (4) is of a plurality of individual coils (4a) which are arranged uniformly in the circumferential direction of the stator air-gap winding (4) and form a closed coil ring.

3. D.C. motor according to claim 2,
**characterised in that**,
the individual coils (4a) are wound in a plurality of layers.

4. D.C. motor according to claim 2 or 3,
**characterised in that**,
the individual coils (4a) are arranged partially overlapping in the circumferential direction of the stator air-gap winding (4).

5. D.C. motor according to claim 4,
**characterised in that**,
the free spaces (12) for the media lines (6) are formed by means of those regions of the stator air-gap winding (4) at which the individual coils (4a) do not overlap.

6. D.C. motor according to any preceding claim,
**characterised in that**,
the stator (4, 5) includes a magnetic return ring (5) in which the coreless stator air-gap winding (4) is arranged, so that the free spaces (12) for the media lines (6) are outwardly bounded in the radial direction by means of the magnetic return ring (5).

7. D.C. motor according to claim 6,
**characterised in that**,
the magnetic return ring (5) is a laminated iron magnetic return ring.

8. D.C. motor according to any of claims 2 to 7,
**characterised in that**,
the individual coils (4a) are formed to be triangular in shape, in particular equilateral triangular.

9. D.C. motor according to claim 8,
**characterised in that**,
the triangular individual coils (4a) are arranged with their base side (13) parallel to the longitudinal axis of the d.c. motor (1).

10. D.C. motor according to any of claims 2 to 9,
**characterised in that**,
the stator air-gap winding (4) is of six individual coils (4a), the respective mutually opposite individual coils (4a) being connected to one another to a coil pair and to one phase.

11. D.C. motor according to any preceding claim,
**characterised in that**,
the stator air-gap winding (4) is sealed or filled with plastics.

12. D.C. motor according to any preceding claim,
**characterised in that**,
the rotor magnet (3) is a double pole diametrically magnetised permanent magnet.

13. D.C. motor according to any preceding claim,
**characterised in that**,
the media lines (6) are produced of a non-magnetic material.

14. D.C. motor according to any preceding claim,
**characterised in that**,
the dimensions of the d.c. motor (1) are so selected that with an outer diameter of 22 mm of the d.c. motor (1) the free spaces (12) are just large enough for the media lines (6) to be passed through the d.c. motor (1).

15. D.C. motor according to any preceding claim,
**characterised in that**,
the d.c. motor (1) has a coupling onto which the dental instrument to be driven by means of the d.c. motor (1) can be inserted.

16. D.C. motor according to any preceding claim,
**characterised in that**,
the rotor magnet (3) and the stator having the stator air-gap winding (4) and the magnetic return ring (5) are formed in annular shape and arranged concentrically of one another.

17. D.C. motor according to any preceding claim,
**characterised in that**,
the free spaces (12) run in the longitudinal direction of the d.c. motor (1) and substantially parallel to the longitudinal axis of the d.c. motor.

18. D.C. motor according to claim 15,
**characterised in that**,
after removal of the coupling (8) from the motor housing (7), the rotor magnet (3) can be drawn laterally out of the motor housing (7).

## Revendications

1. Moteur à courant continu (1) sans collecteur pour l'entraînement d'un instrument dentaire couplable, doté d'un aimant rotor (3) sur paliers tournant sur un arbre (2),
doté d'un stator (4,5) avec bobinage d'entrefer stator (4) saillant,
doté de conducteurs médians (6), permettant d'amener certains moyens d'alimentation à l'instrument dentaire couplable et
doté d'une carcasse de moteur (7),
**caractérisé en ce que**
le bobinage d'entrefer stator (4)présente des interstices (12) pour les conducteurs médians (6).

2. Moteur à courant continu selon la revendication 1,
**caractérisé en ce que**
le bobinage d'entrefer stator (4) est constitué de plusieurs bobines élémentaires (4a) disposées uniformément dans le sens circonférentiel du bobinage d'entrefer stator (4)et formant un tore bobiné fermé.

3. Moteur à courant continu selon la revendication 2,
**caractérisé en ce que**
les bobines élémentaires (4a) présentent un enroulement multicouche.

4. Moteur à courant continu selon la revendication 2 ou 3,
**caractérisé en ce que**
les bobines élémentaires (4a) dans le sens circonférentiel du bobinage d'entrefer stator (4) se chevauchent partiellement.

5. Moteur à courant continu selon la revendication 4,
**caractérisé en ce que**
les interstices (12) pour les conducteurs médians (6) sont formés par les zones du bobinage d'entrefer stator (4) au niveau desquelles les bobines élémentaires (4a) ne se chevauchent pas.

6. Moteurs à courant continu selon l'une des revendications précédentes,
**caractérisés en ce que**
le stator (4,5) comprend un anneau de blindage (5) à l'intérieure duquel est situé le bobinage d'entrefer stator (4) saillant de telle façon que les interstices (12) pour les conducteurs médians (6) sont limités à l'extérieur dans le sens radial par l'anneau de blindage (5).

7. Moteur à courant continu selon la revendication 6,
**caractérisé en ce que**
l'anneau de blindage (5) est un anneau de blindage en fer feuilleté.

8. Moteur à courant continu selon l'une des revendications 2 à 7,
**caractérisé en ce que**
les bobines élémentaires (4a) sont de forme triangulaire, particulièrement en forme de triangle isocèle.

9. Moteur à courant continu selon la revendication 8,
**caractérisé en ce que**
les bobines élémentaires (4a) triangulaires sont disposées de façon à ce que leur base (13) soit parallèle à l'axe longitudinal du moteur à courant continu.

10. Moteur à courant continu selon l'une des revendications 2 à 9,
**caractérisé en ce que**
le bobinage d'entrefer stator (4) est constitué de six bobines élémentaires (4a), où les différentes bobines élémentaires opposées (4a) sont associées l'une à l'autre pour former une bobine double et fonctionnent en phase.

11. Moteur à courant continu selon l'une des revendications précédentes,
**caractérisé en ce que**
l'on scelle ou l'on pulvérise le bobinage d'entrefer stator (4) avec une matière synthétique.

12. Moteur à courant continu selon l'une des revendications précédentes,
**caractérisé en ce que**
l'aimant rotor est un aimant permanent bipolaire magnétisé diamétralement.

13. Moteur à courant continu selon l'une des revendications précédentes,
**caractérisé en ce que**
les conducteurs médians sont fabriqués à partir d'un matériau non magnétique.

14. Moteur à courant continu selon l'une des revendications précédentes,
**caractérisé en ce que**
les dimensions du moteur à courant continu (1) sont déterminées de manière à ce que, pour un diamètre extérieur du moteur à courant continu (1) de 22 mm, les interstices (12) soient tout juste assez grands pour permettre le passage des conducteurs médians (6) à travers le moteur à courant continu (1).

15. Moteur à courant continu selon l'une des revendications précédentes,
**caractérisé en ce que**
le moteur à courant continu (1) est doté d'un dispositif d'accouplement (8) permettant d'enficher un instrument dentaire devant être entraîné par le moteur à courant continu (1).

16. Moteur à courant continu selon l'une des revendications précédentes,
**caractérisé en ce que**
l'ensemble constitué par l'aimant rotor (3), le stator doté d'un bobinage d'entrefer stator (4) et l'anneau de blindage présente une forme toroïdale et une disposition concentrique.

17. Moteur à courant continu selon l'une des revendications précédentes,
**caractérisé en ce que**
les interstices sont dans le sens longitudinal du moteur à courant continu (1) et sont fondamentalement parallèles à l'axe longitudinal du moteur à courant continu.

18. Moteur à courant continu selon la revendication 15,
**caractérisé en ce que**
L'aimant rotor (3) peut être retiré de la carcasse de moteur (7) latéralement, dès lors que le dispositif d'accouplement (8) est séparé de la carcasse de moteur (7).
